Europäisches Patentamt

European Patent Office

Office européen des brevets

(11) Publication number: **0 068 496**
**B1**

(12) **EUROPEAN PATENT SPECIFICATION**

(45) Date of publication of patent specification: **20.02.85**

(21) Application number: **82105780.9**

(22) Date of filing: **29.06.82**

(51) Int. Cl.⁴: **F 16 C 3/02,** F 16 C 17/04, F 01 D 25/16

(54) Rotor shaft made of chromium alloy steel.

(30) Priority: **01.07.81 JP 101173/81**

(43) Date of publication of application:
**05.01.83 Bulletin 83/01**

(45) Publication of the grant of the patent:
**20.02.85 Bulletin 85/08**

(84) Designated Contracting States:
**DE GB**

(56) References cited:
**EP-A-0 053 515**
**GB-A-1 095 999**

(73) Proprietor: **Hitachi, Ltd.**
**5-1, Marunouchi 1-chome**
**Chiyoda-ku Tokyo 100 (JP)**

(72) Inventor: **Tsuchiya, Keiichi**
**Shimuraryo, 42 Nakadai-2-chome**
**Itabashi-ku Tokyo (JP)**
Inventor: **Hisano, Katsukuni**
**29-4, Nishinarusawacho-4-chome**
**Hitachi-shi (JP)**
Inventor: **Mizoi, Takao**
**16-1, Nishinarusawacho-1-chome**
**Hitachi-shi (JP)**
Inventor: **Tan, Toshimi**
**8-3-303, Nishinarusawacho-1-chome**
**Hitachi-shi (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

## Description

Background of the invention

The present invention relates to a rotor shaft made of a chromium alloy steel containing 8 to 14% of chromium and, more particularly, to a steam turbine rotor shaft having a thrust runner and made of a chromium alloy steel of the type mentioned above.

In recent years, there is an increasing tendency of use of so-called 12% Cr alloy steel containing about 12% of chromium and having an excellent high temperature strength and toughness. The 12% Cr steel, however, exhibits an inferior bearing properties, particularly inferior galling or scoring properties. Therefore, it is often experienced that the bearings such as journal bearings and thrust bearings of a rotor shaft are seriously damaged due to a seizure of the bearing metal caused by foreign matters such as dust accidentally come into these bearings.

Japanese Laid-open Patent Publication No. 16744/1980 discloses a technique in which a layer of a metal having a good bearing property is provided by metallizing or build-up welding on the surface of the journal portion of a rotor shaft made of 12% Cr steel facing the journal bearing thereby to improve the bearing properties. The metal layer provided by metallizing, however, shows only an inferior bonding strength to a base metal constituting the rotor shaft. In addition, oxides and/or cavities are liable to be caused in the metal layer formed by the metallizing, so that the metal layer exhibits only low tensile strength and toughness. In consequence, there is caused such a fear that the metallizing layer is separated from the journal surface to damage the journal bearing.

On the other hand, regarding the metal layer formed by the build-up welding the kind of the welding metals usable is restricted from the view point of welding condition in relation to the base metal forming the rotor shaft, in order to prevent cracks from occurring in the built-up welding layer. In consequence, it is often experienced that a weld metal meeting the welding condition is reluctantly selected at the cost of inferior bearing properties without being capable of selecting metals superior in bearing properties. It is also pointed out that in the above-mentioned publication there is no description concerning a rotor shaft having a thrust runner for a thrust bearing.

Summary of the invention

Accordingly, it is a primary object of the invention to provide a rotor shaft with a thrust runner superior in bearing properties, made of a chromium alloy steel containing 8 to 14% of chromium.

To this end, according to the invention, there is provided a rotor shaft with a disc-shaped thrust runner and made of a chromium alloy steel containing 8 to 14% of chromium, the rotor shaft comprising a thrust runner protecting plate fixed by fixing means to the thrust-receiving side of said thrust runner, the thrust runner protecting plate being made of a low alloy steel having superior bearing characteristics and being divided in the circumferential direction into a plurality of segments, whereby the damaging of the thrust bearing facing the thrust runner of the rotor shaft can be avoided.

Brief description of the drawings

Fig. 1 is a sectional view of a turbine rotor made of 12% Cr steel and having a double thrust runner protecting plate, constructed in accordance with an embodiment of the invention;

Fig. 2 is a partial sectional view of the rotor shaft shown in Fig. 1, showing particularly the double thrust runner provided with the thrust runner protecting plate made of a low alloy steel;

Fig. 3 is a perspective view showing the detail of the thrust runner protecting plate shown in Fig. 2;

Figs. 4 and 5 show the measured values of surface roughness of a rotor shaft made of 12% Cr steel and of a rotor shaft made of a low alloy steel, respectively;

Fig. 6 is a partial sectional view of a rotor shaft made of chromium steel in accordance with another embodiment of the invention, having a double thrust runner protecting plate mounted on the thrust runner;

Fig. 7 is a sectional view of a turbine rotor in accordance with still another embodiment of the invention, made of 12% Cr steel and provided with a different type of thrust runner provided with a single thrust runner;

Fig. 8 is a partial sectional view showing the single thrust runner of the rotor shaft shown in Fig. 7 in a larger scale; and

Figs. 9 and 10 are partial perspective views of rotor shafts constituted in accordance with further embodiments of the invention each of which shafts is made of a chromium alloy steel and has a different form of thrust runner protecting plate.

Description of the preferred embodiments

A rotor shaft having some preferred forms of thrust runner protecting plates formed in accordance with the invention will be described hereinunder with respect to the accompanying drawings. Throughout the description, the term "12% Cr steel rotor shaft" is used to generally mean steam turbine rotor shafts made of chromium alloy steels having martensite structures and containing 8 to 14% by weight of chromium.

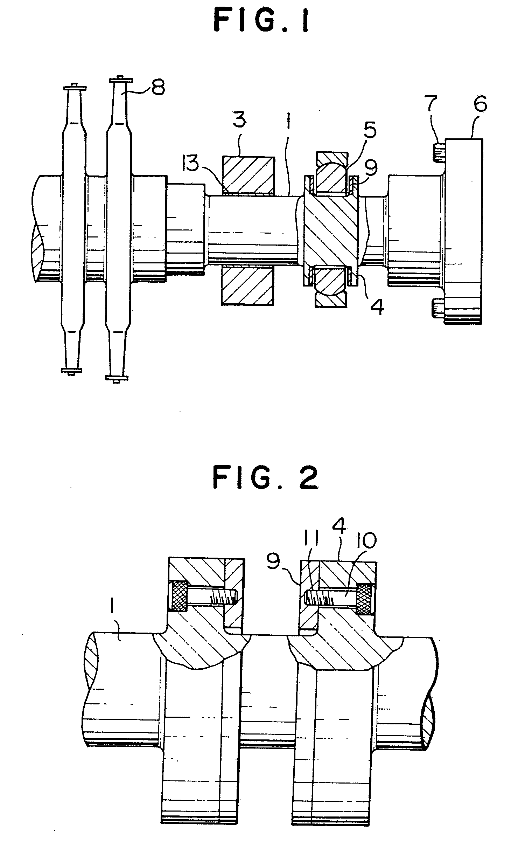

Referring first to Fig. 1, a 12% Cr steel rotor 1 has a plurality of stages spaced in the axial direction, each stage having a multiplicity of moving blades 8 circumferentially arranged in an annular form. The rotor shaft 1 is supported at its journal portion by means of a journal bearing 3. Two thrust runners 4 axially spaced apart are formed integrally with the rotor shaft 1 and are positioned at both sides of a thrust bearing 5 adapted to receive the thrust acting on the rotor shaft 1. The 12% Cr steel rotor shaft 1 is provided at its one end with a coupling 6 formed integrally therewith. The coupling 6 has a plurality of coupling bolts 7 attached thereto. In this 12% Cr steel rotor, a sleeve 13 of a low alloy steel having a good bearing property is fitted around the journal portion of the 12% Cr steel rotor 1 facing the journal bearing 3, while a thrust runner protecting plate 9 of a low alloy steel having a good bearing property is provided on the thrust receiving side of each thrust runner 4 facing the thrust bearing 5.

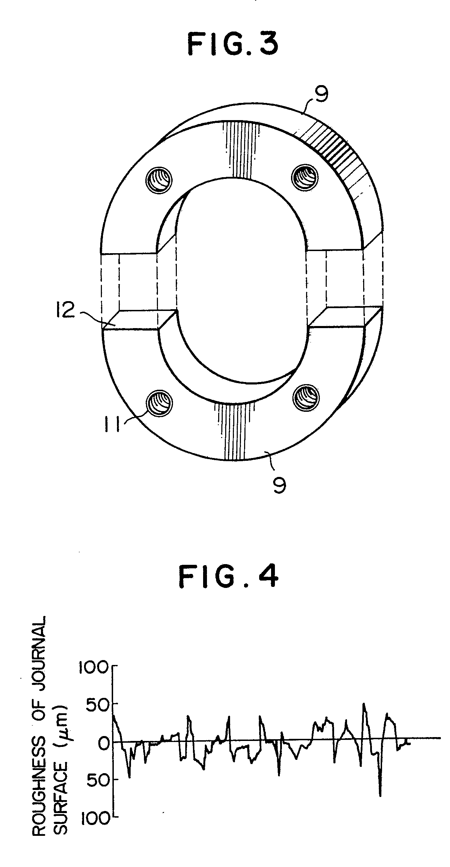

To explain in more detail, the 12% Cr steel rotor shaft 1 of the invention has a pair of disc-shaped thrust runners 4 as shown in Fig. 2, and the thrust bearing 5 is positioned between these runners 4. The thrust runner protecting plate 9 made of a low alloy steel having a good bearing property is attached by means of bolts 10 to the thrust-receiving side of each thrust runner 4. The thrust runner protecting plate 9 is formed of a low alloy steel containing as main components metals having a good bearing property such as chromium, molybdenum, vanadium or the like, and is beforehand worked and divided in the circumferential direction into two segments as shown in Fig. 3 so that the size and shape of the thrust runner protecting plate 9 may match the thrust supporting side of the double thrust runner. Since the thrust runner protecting plate 9 is divided into segments, it is possible to mount the same around the rotor shaft by securing each segment independently to the thrust receiving side of each thrust runner 4. Each segment of the thrust runner protecting plate 9 is provided with threaded holes 11 into which the bolts 10 are screwed to fix the segment to the thrust runner 4. After attaching two segments of the thrust runner protecting plate 9, the two segments are welded to each other at their joint surfaces 12, i.e. the slit surfaces, to form an integral annular thrust collar protecting member 9. This welding can be achieved by any desired welding method, however, the electron beam welding can be adopted most preferably. The electron beam welding permits the degassing of molten metal during welding, so that the weld metal is purified to ensure a good mechanical property of the weld zone. In addition, the electron beam welding can diminish the amount of correction work to be effected after the welding, because of small welding distortion. For these reasons, the segments of the thrust runner protecting plate 9 in the embodiment of the present invention are joined to each other by the electron beam welding. The thrust runner protecting plate 9 integrated by the welding is finished smoothly regarding its external surfaces by mechanical working. In consequence, it is possible to obtain a thrust runner in which the thrust receiving side of the runner made of 12% Cr steel of poor friction property is protected by a thrust runner protecting plate 9 is made of a low alloy steel having a good friction property. According to the invention, therefore, it is possible to obtain a 12% Cr steel rotor shaft capable of preventing the damage of the thrust bearing 5.

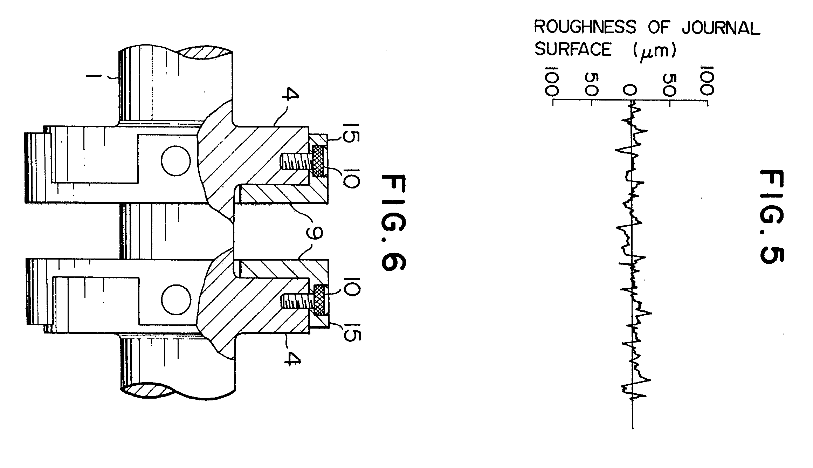

A whole bainite steel containing, by weight, 0.2 to 2.25% of chromium and 0.2 to 1% of molybdenum is preferably used as the low alloy steel having good bearing property for the thrust running protecting plate 9. More preferably, there is used another whole bainite steel further containing 0.05 to 0.5% by weight of vanadium in addition to the components of the former bainite steel. The low alloy steel used as the material of the thrust runner protecting plate offers the following advantage. Namely, this low alloy steel exhibits a thermal conductivity which is about 30% higher than that of the 12% Cr steel used as the material of the rotor shaft, so that the temperature rise of the protecting plate during operation of the turbine is much smaller than that of the thrust runner having no protecting plate. This in turn means such advantage that the tendency of seizure between the thrust runner protecting plate 9 and the thrust bearing 5 becomes small. This advantage has been confirmed through an experiment conducted in the following manner. Two rotor shaft were prepared, one made from the 12% Cr steel while the other made from the same material as the thrust runner protecting plate, i.e. a low alloy steel containing chromium, molybdenum and vanadium. While rotating these rotors, fine foreign matters were inserted in the lubrication oil supplied to the bearings, and the degree of damage on the journal surfaces of these rotor shafts were observed. Figs. 4 and 5 show, respectively, the roughness of journal surface of the 12% Cr rotor shaft and that of the low alloy steel rotor shaft after running for a predetermined period of time. From these graphs, it is found that the low alloy steel rotor shaft as shown in Fig. 5 exhibits a higher wear resistance than that of the 12% Cr steel rotor shaft as shown in Fig. 4.

The material of the 12% Cr steel rotor shaft according to the invention is preferably a forged steel having whole martensite structure and consisting essentially of, by weight, 0.1 to 0.3% of C, not more than 0.6% of Si, 0.4 to 1.5% of Mn, not more than 1.2% of Ni, 8 to 14% of Cr, 0.5 to 1.5% of Mo, 0.05 to 0.3% of V, 0.02 to 0.15% of Nb and 0.04 to 0.1% of N and the balance Fe and inevitable impurities.

Fig. 6 shows another thrust runner of a 12% Cr steel rotor shaft in accordance with another embodiment of the invention. This embodiment is discriminated from the first embodiment in the point that each thrust runner protecting plate 9 attached to the thrust receiving side of the thrust runner 4 is provided at the radially outer end thereof with an axially extending annular projection 15 at which the protecting plate 9 is secured to the thrust runner 4 by means of bolts 10. This embodiment is suited particularly for such a case where the axial thickness of the thrust runner protecting plate cannot be increased sufficiently due to a structural restriction, i.e. when it is not allowed to provide the threaded holes 11 in the radial plane of the thrust runner protecting plate 9.

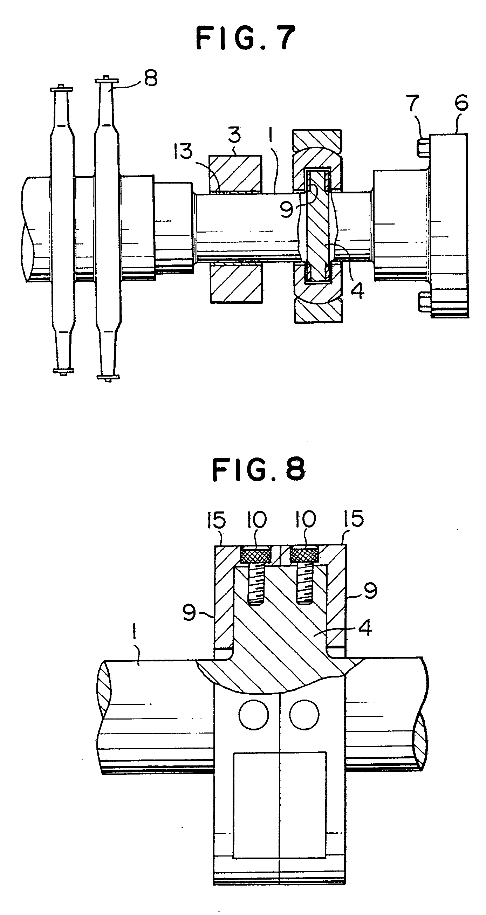

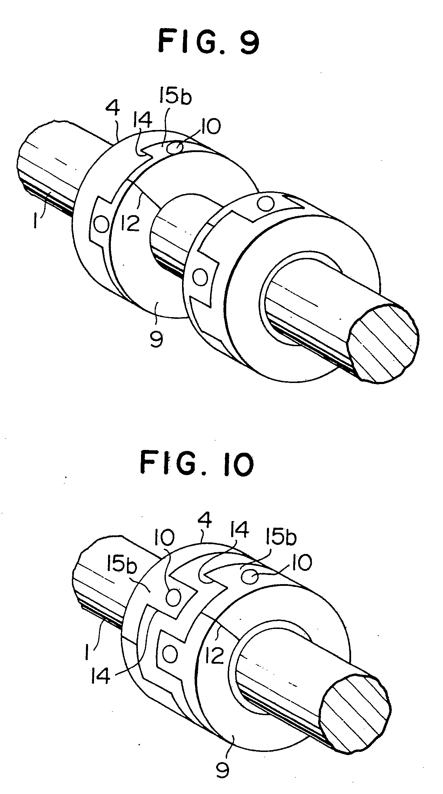

Fig. 7 and 8 show another 12% Cr steel turbine rotor in accordance with still another embodiment of the invention. The rotor shaft of this embodiment is discriminated from the embodiments shown in Figs. 1 and 2 and Fig. 6 in its peculiar configuration of the single thrust runner 4. Namely, the rotor shaft 1 shown in Figs. 7 and 8 has a single disc-shaped thrust runner 4 formed integrally therewith. Thus, both axial end surfaces of this single thrust runner 4 constitute thrust receiving side in cooperation with a thrust bearing 5 which is disposed to ride on the thrust runner 4. A thrust runner protecting plate 9, made of the same low alloy steel used in the preceding embodiments, is attached to each thrust receiving side of the single thrust runner 4. Similarly to the case of the second embodiment explained in connection with Fig. 6, the thrust runner protecting plate 9 of this embodiment is composed of two segments each provided at the radially outer end thereof with axial projection 15. Two segments are secured to corresponding thrust-receiving side of the thrust runner 4 by means of bolts 10. The joint surfaces, i.e. the split surfaces, of two segments of each thrust runner protecting plate 9 are jointed to each other by the same electron beam welding as in the case of the second embodiment explained in connection with Fig. 6. It will be seen that this embodiment offers the same advantage as that derived from the second embodiment.

Fig. 9 shows a still another rotor shaft in accordance with a further embodiment of the invention in which a plurality of recesses 14 extending in the axial direction of the rotor shaft are formed at a constant circumferential pitch in the radially outer end of the thrust receiving side of the thrust runner 4. On the other hand, the thrust runner protecting plate 9 made of a low alloy steel is provided at its outer peripheral portion with a plurality of projections 15b insertable in the recesses 14 at the same circumferential pitch as the recesses 14. In assembling, after fitting the projections 15b in the recesses 14, the thrust runner protecting plate 9 is fixed to the thrust runner 4 by means of bolts 10. Similarly to the case of the preceding embodiments, two segments of the thrust runner protecting plate 9 are jointed to each other by welding. This embodiment offers, in addition to the advantages brought about by the preceding embodiments, an advantage that the thrust runner protecting plate 9 can be secured to the thrust runner 4 without increasing the outside diameter of the assembly.

Fig. 10 shows a still further embodiment in which the same configurations of the thrust runner and protecting plate as shown in Fig. 9 are applied to the single thrust runner shown in Fig. 7 having two thrust receiving surfaces. It will be clear to those skilled in the art that the embodiment shown in Fig. 10 offers the same advantage as that derived from the embodiment shown in Fig. 9.

As has been described, according to the invention, a thrust collar protecting member of a low alloy steel having a good bearing property is attached to the thrust receiving side of the thrust runner of a rotor shaft made of a 8 to 14% Cr steel which inherently has inferior bearing property but a superior high temperature strength and toughness, so that it is possible to obtain a rotor shaft having superior high temperature strength and toughness while achieving a good bearing property at the thrust runner thereof.

## Claims

1. A rotor shaft (1) with a disc-shaped thrust runner (4) and made of a chromium alloy steel containing 8 to 14% by weight of chromium, characterized by comprising a thrust runner protecting plate (9) made of a low alloy steel fixed by fixing means (10) to the thrust receiving side of said thrust runner facing a thrust bearing, said thrust runner protecting plate being divided into a plurality of segments in the circumferential direction.

2. A rotor shaft according to claim 1, wherein after fixing said segments of said thrust runner protecting plate to said thrust runner said segments are welded together at their joint surfaces (12).

3. A rotor shaft according to claim 1, wherein each segment of said thrust runner protecting plate is provided at its radially outer end with a projection (15) extending in the axial direction of said rotor shaft, said segment being secured to said thrust runner at said projection by said fixing means.

4. A rotor shaft according to claim 3, wherein said thrust runner (4) is provided at its outer peripheral portion with recesses (14), each of the axially extending projections (156) of the thrust runner protecting plate being inserted in each of said recesses.

5. A rotor shaft according to claim 1, wherein said thrust runner protecting plate (9) is made of a low alloy steel which is a bainite steel containing, by weight, 0.2 to 2.25% of Cr and 0.2 to 1% of Mo.

6. A rotor shaft according to claim 1, wherein said thrust runner protecting plate (9) is made of a low alloy steel which is a bainite steel containing, by weight, 0.2 to 2.25% of Cr, 0.2 to 1% of Mo and 0.05 to 0.5% of V.

7. A rotor shaft according to claim 1, wherein said rotor shaft (1) is made of a chromium alloy steel having a whole martensite structure and consisting essentially of, by weight, 8 to 14% of Cr, 0.1 to 0.3% of C, not more than 0.6% of Si, 0.4 to 1.5% of Mn, not more than 1.2% of Ni, 0.5 to 1.5% of Mo, 0.05 to 0.3% of V, 0.02 to 0.15% of Nb, 0.04 to 0.1% of N, and the balance Fe and inevitable impurities.

## Patentansprüche

1. Rotorwelle (1) mit einer Wellendruckscheibe (4) aus chromlegiertem Stahl mit 8 bis 14 Gew.-% Chrom, gekennzeichnet durch eine Schutzscheibe (9) für die Wellendruckscheibe aus niedriglegiertem Stahl, die mit Befestigungen (10) an der den Druck aufnehmenden Seite der Wellendruckscheibe gegenüber des Drucklagers gesichert ist, wobei die Schutzscheibe für die Wellendruckscheibe in mehrere Segmente in Umfangrichtung geteilt ist.

2. Rotorwelle nach Anspruch 1, dadurch gekennzeichnet, daß nach Befestigung der Segmente der Schutzscheibe an die Wellendruckscheibe die Segmente an ihren Berührungsflächen (12) zusammengeschweißt werden.

3. Rotorwelle nach Anspruch 1, dadurch gekennzeichnet, daß jedes Segment der Schutzscheibe für die Wellendruckscheibe am radial äußeren Ende mit einem Fortsatz (15) in Axialrichtung der Rotorwelle versehen ist, wobei das Segment an diesem Fortsatz durch die Befestigungen an die Wellendruckscheibe gesichert ist.

4. Rotorwelle nach Anspruch 3, dadurch gekennzeichnet, daß die Wellendruckscheibe (4) an ihrer äußeren Peripherie mit Einbuchtungen (14) versehen ist, wobei jeder der Fortsätze (15b) in Axialrichtung der Schutz-scheibe für die Wellendruckscheibe in jede dieser Einbuchtungen eingepaßt ist.

5. Rotorwelle nach Anspruch 1, dadurch gekennzeichnet, daß die Schutzscheibe (9) für die Wellendruckscheibe aus niedriglegiertem Bainit-Stahl ist, der 0,2 bis 2,25 Gew.-% Cr und 0,2 bis 1 Gew.-% Mo enthält.

6. Rotorwelle nach Anspruch 1, dadurch gekennzeichnet, daß die Schutzscheibe (9) für die Wellendruckscheibe aus niedriglegiertem Bainit-Stahl ist, der 0,2 bis 2,25 Gew.-% Cr, 0,2 bis 1 Gew.-% Mo und 0,05 bis 0,5 Gew.-% V enthält.

7. Rotorwelle nach Anspruch 1, dadurch gekennzeichnet, daß die Rotorwelle (1) aus chromlegiertem Stahl mit einer Gesamtmartensitstruktur ist und im wesentlichen aus 8 bis 14 Gew.-% Cr, 0,1 bis 0,3 Gew.-% C, nicht über 0,6 Gew.-% Si, 0,4 bis 1,5 Gew.-% Mn, nicht über 1,2 Gew.-% Ni, 0,5 bis 1,5 Gew.-% Mo, 0,05 bis 0,3 Gew.-% V, 0,02 bis 0,15 Gew.-% Nb, 0,04 bis 0,1 Gew.-% N besteht, wobei der Rest Fe und unvermeidliche Verunreinigungen ist.

## Revendications

1. Arbre (1) de rotor avec un disque de butée (4) et en acier allié au chrome comprenant de 8 à 14 % en poids de chrome caractérisé par un disque de protection (9) pour le disque de butée en acier faiblement allié, fixé par des moyens de fixation (10) au côté du disque de butée qui reçoit la pression et fait face au palier de butée, ledit disque de protection du disque de butée étant divisé en diection circonférencielle en plusieurs segments.

2. Arbre de rotor selon la revendication 1, caractérisé en ce que après fixation de ces segments du disque de protection au disque de butée, lesdits segments sont soudés à leurs surfaces de contact (12).

3. Arbre de rotor selon la revendication 1, caractérisé en ce que chaque segment dudit disque de protection du disque de butée comprend à son extrémité extérieure radiale une prolongation (15) dans la direction axiale dudit arbre de rotor, ledit segment étant fixé audit disque de butée par des moyens de fixation situé dans cette prolongation.

4. Arbre de rotor selon la revendication 3 caractérisé en ce que ledit disque de butée comprend à sa partie périphérique extérieure des crans (14), chacure desdites prolongations axiales (15b) dudit disque de protection étant inserrée dans chacun desdits crans.

5. Arbre de rotor selon la revendication 1 caractérisé en ce que le disque de protection (9) du disque de butée est fabriqué en acier faiblement allié qui est un acier bainite comprenant 0,2 à 2,25 % en poids de chrome et 0,2 à 1 % en poids de molybdène.

6. Arbre de rotor selon la revendication 1, caractérisé en ce que le disque de protection (9) du disque de butée est fabriqué en acier faiblement allié qui est un acier bainite comprenant 0,2 à 2,25 % en poids de chrome jusqu'à 1 % en poids de molybdène et 0,05 à 0,5 % en poids de vanadium.

7. Arbre de rotor selon la revendication 1 caractérisé en ce que l'abre de rotor est fabriqué en acier chromé ayant · une structure entièrement martensitique et comprenant essentiellement en pourcentage en poids 8 à 14 % de chrome, 0,1 à 0,3 % de carbone, au maximum 0,6 % de silicium, 0,4 à 1,5 % de manganèse, au maximum 1,2 % de nickel, 0,5 à 1,5 % de molybdène, 0,05 à 0,3 % de vanadium, 0,02 à 0,15 % de niob, 0,04 à 0,1 % d'azote et pour le reste fer et impuretés inévit-ables.

# FIG. 1

# FIG. 2

# FIG. 3

9

12

11

9

# FIG. 4

ROUGHNESS OF JOURNAL SURFACE (μm)

100
50
0
50
100

# FIG. 5

ROUGHNESS OF JOURNAL SURFACE (μm)

100
50
0
50
100

# FIG. 6

15  10          10  15

4          9          4

1

# FIG. 7

# FIG. 8

4

## FIG. 9

## FIG. 10